# EUROPÄISCHE PATENTANMELDUNG

(11) **EP 4 306 366 A2**
(43) Veröffentlichungstag der Anmeldung: **17.01.2024**
(21) Anmeldenummer: 23214221.6
(22) Anmeldetag: 26.03.2019
(51) Int. Cl.: B60R 13/10

(54) **FAHRZEUGIDENTIFIKATIONSMITTEL**

(30) Priorität: 28.03.2018 DE 102018002585
(62) Teilanmeldung aus: 19718246.2
(71) Anmelder: Tönnjes ISI Patent Holding GmbH, 27751 Delmenhorst (DE)
(72) Erfinder: BEENKEN, Björn, 27777 Ganderkesee (DE)
(74) Vertreter: Hoener, Matthias

(57) **Zusammenfassung**

Fahrzeugidentifikationsmittel dienen dazu, Fahrzeuge mittels einer eindeutigen Kennzeichnung zu identifizieren. Als besonders problematisch erweist sich deren Fälschungs- sowie Manipulationssicherheit. Dazu weisen bekannte Fahrzeugidentifikationsmittel berührungslos auslesbare Datenträger auf, auf denen Daten zur eindeutigen Identifikation gespeichert sind. Derartige Identifikationsmittel sind jedoch sehr komplex aufgebaut und störanfällig. Die Erfindung schafft ein verbessertes Fahrzeugidentifikationsmittel (10), das einen möglichst einfachen Aufbau aufweist und weniger störanfällig ist. Das wird dadurch erreicht, dass einem Kennzeichenkörper (11, 36) ein NFC-Transponder (19, 25, 35, 42) mit einer Antenne (20, 26) und einem Datenträger (21, 30, 31) auf einem Trägermaterial (22, 24, 37) zugeordnet sind.

## Beschreibung

Die Erfindung betrifft ein Fahrzeugidentifikationsmittel gemäß dem Oberbegriff des Anspruchs 1, des Anspruchs 6 sowie des Anspruchs 18.

Das hier beanspruchte Fahrzeugidentifikationsmittel dient dazu, Fahrzeuge mittels einer eindeutigen Kennzeichnung zu identifizieren. Diese Kennzeichnung beinhaltet vorzugsweise eine Zahlen- und/oder Nummernkombination oder auch anderen eindeutig zuzuordnende Daten. Zur eindeutigen Zuordnung einer Identifikation zu einem Fahrzeug ist das Fahrzeugidentifikationsmittel beispielsweise als ein sogenanntes Nummernschild vorne und/oder hinten an einer Karosserie oder Stoßstange des Fahrzeugs befestigt. Alternativ oder auch ergänzend kann das Fahrzeugidentifikationsmittel beispielsweise auch an einer Fenster- bzw. Windschutzscheibe angebracht bzw. angeklebt sein. Darüber hinaus ist es auch denkbar, dass die hier beschriebenen Fahrzeugidentifikationsmittel zusätzlich zu den bekannten Nummernschildern als Zusatzkennzeichen oder "drittes Kennzeichen" dienen.

Als besonders problematisch erweist sich die Fälschungssicherheit von Fahrzeugidentifikationsmitteln. Derartige Identifikationsmittel werden sehr häufig gefälscht, manipuliert oder in einer unberechtigten Art und Weise von einem Fahrzeug entfernt, um für andere Fahrzeuge verwendet zu werden. Eine Maßnahme, um dies zu verhindern, besteht darin, Fahrzeugidentifikationsmittel zu nutzen, welche einen berührungslos auslesbaren Datenträger aufweisen. Auf diesem Datenträger können dazu sämtliche Daten gespeichert werden, welche für die eindeutige Identifikation des Fahrzeugs notwendig sind. So können auf dem Datenspeicher beispielsweise die Buchstaben- und Zahlenkombinationen des eigentlichen Kennzeichens, der Typ des Fahrzeugs sowie Angaben über den eingetragenen Inhaber des Fahrzeugs gespeichert werden.

Das Auslesen des Datenträgers wird üblicherweise mittels eines Lesegeräts vorgenommen, welches nicht Teil des Fahrzeuges ist. Bei derartigen Lesegeräten kann es sich um bekannte Sende- und Empfängereinheiten, welche je nach verwendetem Wellenlängenbereich unterschiedliche Reichweiten aufweisen, handeln. Durch einen Vergleich der ausgelesenen Daten mit denjenigen des Fahrzeugs, können Rückschlüsse auf eventuelle Fälschungen oder Manipulationen gezogen werden. Insbesondere lässt sich durch den Abgleich der Daten feststellen, ob das Identifikationsmittel bzw. das Kennzeichen dem richtigen Fahrzeug zugeordnet ist.

Bisher bekannte Kennzeichen mit berührungslos auslesbaren Datenträgern weisen eine separate Antenne auf. Diese einen Transponder bildende Antenne (oder auch Antennenstruktur) samt Datenträger ist zumeist auf einen metallischen Kennzeichenkörper angeordnet. Diese Anordnung der Antennenstruktur auf dem Kennzeichenkörper steht jedoch in einem Zusammenhang mit einer großen Störanfälligkeit, insbesondere beim Auslesen des Datenträgers. Diese Störanfälligkeit kann nur durch einen aufwendigen und komplexen Aufbau des Fahrzeugidentifikationsmittels vermieden werden.

Der Erfindung liegt die Aufgabe zugrunde, ein verbessertes Fahrzeugidentifikationsmittel zu schaffen, das einen möglichst einfachen Aufbau aufweist und weniger störanfällig ist.

Ein Fahrzeugidentifikationsmittel zur Lösung der Aufgabe weist die Merkmale des Anspruchs 1 auf. Demnach ist es vorgesehen, dass der NFC-Transponder mit der Antenne und dem Datenträger auf einem Trägermaterial dem Kennzeichenkörper zugeordnet sind. Diese Applikation des NFC-Transponders mit dem Trägermaterial auf dem Kennzeichenkörper stellt eine besonders einfache und sichere Art und Weise dar, ein Fahrzeugidentifikationsmittel mit einem NFC-Transponder auszurüsten. Durch das Trägermaterial, mit dem der NFC-Transponder auf dem Kennzeichenkörper appliziert wird, kann eine ausreichende elektromagnetische Isolierung bzw. Entkopplung von dem Kennzeichenkörper erfolgen, sodass die Ankopplung eines elektromagnetischen Feldes zum Auslesen des Datenträgers auf eine zuverlässige Art und Weise erfolgen kann. Es ist weiter denkbar, dass der NFC-Transponder direkt oder auf der Schutzabdeckung auf einer Vorderseite, vorzugsweise in einer Mulde, des Kennzeichenkörpers befestigt ist und über dem NFC-Transponder die Schutzabdeckung oder eine Schutzfolie auf den Kennzeichenkörper appliziert ist, wobei insbesondere der NFC-Transponder in der Mulde mit einer Vergussmasse eingegossen ist. Durch diese Integration ist der Transponder in das Identifikationsmittel inkorporiert. Es bildet somit einen integralen Bestandteil des Identifikationsmittels und kann nur unter Beschädigung bzw. Zerstörung von dem Fahrzeugidentifikationsmittel entfernt werden. Somit schafft diese Integration nicht nur einen erhöhten Schutz gegenüber Umwelteinflüssen, sondern auch gegenüber mechanischen Einwirkungen bzw. Manipulationsversuchen.

Weiter ist es denkbar, dass der NFC-Transponder direkt auf einer Rückseite, vorzugsweise in einer Mulde, des Kennzeichenkörpers befestigt ist, wobei insbesondere der NFC-Transponder in der Mulde mit einer Vergussmasse eingegossen ist.

Darüber hinaus kann es erfindungsgemäß vorgesehen sein, dass zwischen dem vorzugsweise selbstklebenden, Trägermaterial des NFC-Transponders und dem Kennzeichenkörper eine elektrische isolierende Schicht, vorzugsweise ein Kunststoff oder eine Lackschicht, angeordnet ist. Diese zusätzliche Isolierschicht dient zur weiteren elektrischen Entkopplung des NFC-Transponders von dem Kennzeichenkörper. Das elektromagnetische Feld, dem der NFC-Transponder ausgesetzt wird, wird nahezu ausschließlich durch die Antenne des NFC-Transponders absorbiert und dient neben dem Informationsübertrag auch zur Energieversorgung des Transponders. Die Energieversorgung des Transponders, bei dem es sich üblicherweise um ein passives Bauelement handelt, ist essenziell für das Emittieren der Identifikationsinformationen in Form von elektromagnetischen Wellen. Da die Reichweite des hier verwendeten Spektralbereichs (13,56 MHz) nur einige wenige Zentimeter bis Dezimeter beträgt, ist die elektrische Isolierung des NFC-Transponders von dem Kennzeichenkörper besonders wichtig. Nur durch eine ausreichende elektrische Isolierung kann gewährleistet werden, dass genügend Energie von dem NFC-Transponder absorbiert wird, um entsprechende Informationen von dem Transponder wieder zu emittieren.

Vorzugsweise kann es außerdem vorgesehen sein, dass der NFC-Transponder in einem elektrisch nicht leitenden Gehäuse angeordnet ist und das Gehäuse direkt auf dem Kennzeichenkörper positioniert ist. Bei diesem Gehäuse kann es sich vorteilhafterweise um ein Gehäuse aus einem Kunststoff, einem Hartz oder dergleichen handeln. Elektrisch nicht leitende Gehäuse können von elektromagnetischen Wechselfeldern ohne nennenswerte Schwächung bzw. Verluste durchdrungen werden. Gleichzeitig ist die elektrische Entkopplung des NFC Transponders zu dem Kennzeichenkörper ausreichend, um eine besonders effiziente und zuverlässige Anwendung des Fahrzeugidentifikationsmittels zu gewährleisten. Bei diesem Gehäuse mit dem Transponder kann es sich auch um ein sogenanntes Hart-Tag handeln.

Ein Fahrzeugidentifikationsmittel zur Lösung der eingangs genannten Aufgabe weist die Merkmale des Anspruchs 6 auf. Demnach ist es vorgesehen, dass ein Kennzeichenkörper des Fahrzeugidentifikationsmittels eine durch einen Schlitz gebildete UHF-Antenne aufweist und diese UHF-Antenne ein magnetisches Feld erzeugender Datenträger zugeordnet ist, wobei die eine Antenne eines NFC-Transponders, die ebenfalls dem Kennzeichenkörper zugeordnet ist, diesem Schlitz zugeordnet ist, der hier als UHF-Antenne dienender Schlitz wirkt gleichermaßen als Durchbruch für den NFC-Transponder in der zuvor beschriebenen Art und Weise. Demnach kann das Fahrzeugidentifikationsmittel sowohl im UHF- als auch im NFC- bzw. HF-Frequenzbereich ausgelesen werden bzw. senden. Durch diese Kombination eines Datenträgers mit einer UHF-Antenne und einem NFC-Transponder, welche beide dem gleichen Schlitz bzw. Durchbruch für ihre Anwendung nutzen, lässt sich eine besonders einfache Bauweise eines Fahrzeugidentifikationsmittels realisieren, die besonders zuverlässig funktioniert.

Insbesondere stellt es eine vorteilhafte Weiterbildung der vorliegenden Erfindung dar, dass der NFC-Transponder, insbesondere mit der Antenne und dem Datenträger, in einer Mulde in dem Kennzeichenkörper angeordnet ist. Durch diese Mulde kann eine weitere Integration des Transponders in den Kennzeichenkörper erfolgen, was zu einer erhöhten Sicherheit gegenüber Umwelteinflüssen und mechanischen Schäden dient.

Bevorzugt kann es für das erfindungsgemäße Fahrzeugidentifikationsmittel außerdem vorgesehen sein, dass die Antenne des NFC-Transponders wenigstens teilweise, vorzugsweise vollständig in oder über dem Schlitz bzw. einem Durchbruch, insbesondere auf einer Vorderseite oder einer Rückseite des Kennzeichenkörpers angeordnet ist.

Bevorzugterweise ist es vorgesehen, dass der Datenträger induktiv an den Schlitz angekoppelt ist, wobei der Datenträger einen Chip, mindestens eine damit elektrisch leitende verbundene Spule und einen Träger aus einem isolierenden bzw. nicht leitenden Material aufweist und der Chip insbesondere als ein passiver Radio-Frequency-Identification-Chip (RFID-Chip) ausgebildet ist. Dieser Ultrahochfrequenzwellenbereich, auch Dezimeterwellen oder Mikrowellenbereich genannt, liegt typischerweise zwischen 0,3 GHz und 3 GHz. Ein Auslesen erfolgt hier typischerweise in einem Abstand von mehreren Metern, kann aber auch in kleineren Distanzen erfolgen. Ein Auslesen eines Datenträgers in einem Frequenzbereich stört nicht das Auslesen eines weiteren Datenträgers in einem anderen Frequenzbereich. Damit können verschiedene Daten eines oder unterschiedlicher Datenträger in mehreren Frequenzbereichen unabhängig voneinander ausgelesen werden. Dies gilt insbesondere, wenn mehrere separate Datenträger vorgesehen sind, die vorzugsweise in unterschiedlichen Frequenzbereichen arbeiten. Besonders bevorzugt ist für jeden der Frequenzbereiche eine eigene Antenne bzw. Antennenstruktur ausgebildet und/oder optimiert zum separaten Auslesen.

Eine bevorzugte Weiterbildung der Erfindung kann es vorsehen, dass der RFID-Chip elektrisch isoliert im Bereich eines Endes des Schlitzes angeordnet und der NFC-Transponder einem gegenüberliegenden Endbereich des Schlitzes zugeordnet ist, wobei der Schlitz vorzugsweise um die Länge verlängert ist, die der NFC-Transponder den Schlitz überdeckt. Durch diese Anordnung der beiden in verschiedenen Frequenzbereichen arbeitenden Transponder kann der Schlitz sowohl als Durchbruch für den NFC-Transponder verwendet werden, als auch als Schlitzantenne für den RFID-Chip. Somit wird durch einen einzigen Durchbruch bzw. Schlitz sowohl ein zuverlässiger als auch ein effizient arbeitender RFID- als auch NFC-Transponder auf eine einfache Art und Weise einem Kennzeichenkörper zugeordnet. Bevorzugt kann es vorgesehen sein, dass der Datenträger isoliert innerhalb des Schlitzes oder über dem Schlitz angeordnet ist, vorzugsweise elektrisch leitende Bestandteile des Datenträgers von Begrenzungsflächen des Schlitzes beabstandet sind. Durch eine kapazitive und/oder induktive Kopplung des Datenträgers bzw. des RFID-Chips an dem Schlitz kann dieser als Antenne verwendet werden. Dabei kann eine weitere Antenne des RFID-Chips sowie die Schlitzantenne als Verstärkerelemente für eine erhöhte Sende- bzw. Empfangsleistung verwendet werden.

Weiter kann es die vorliegende Erfindung vorsehen, dass der Datenträger im Kennzeichenkörper eingebettet ist, insbesondere im Schlitz fixiert ist, vorzugsweise von mindestens einer Beschichtung auf dem Kennzeichenkörper. Diese Einbettung des Datenträgers durch eine Vergussmasse, wie beispielsweise ein Kunststoff oder ein Hartz, wird der RFID-Chip bzw. Datenträger vor Manipulationen bzw. Umwelteinflüssen geschützt. Durch diese Fixierung innerhalb des Schlitzes wird ein Fahrzeugidentifikationsmittel geschaffen, welches, abgesehen von dem geprägten Beschriftungsfeld und einem geprägten Randbereich, ebenflächig ist. Sofern der Kennzeichenkörper mit einer Schutzschicht versehen ist, ist von außen nicht erkennbar, dass das Identifikationsmittel einen Datenträger aufweist. Dies bietet insbesondere einen Schutz vor Manipulationen und Zerstörung des Datenträgers.

Auch kann es vorgesehen sein, dass zumindest eine sichtbare Beschichtung als eine insbesondere selbstklebende Reflexfolie ausgebildet ist, die vorzugsweise im Bereich des Datenträgers und/oder des Schlitzes und/oder des NFC-Transponders so ausgebildet ist, dass sie keine elektrisch leitenden Bestandteile aufweist, insbesondere, dass die Beschichtung einen sehr hohen ohmschen Widerstand aufweist. Diese zumindest im Bereich des Schlitzes demetallisierte Beschichtung wird derart über den Schlitz auf den Kennzeichen appliziert, dass der demetallisierte Bereich wenigstens teilweise mit dem Schlitz zusammenfällt. Dadurch kann eine besonders effektive Ankopplung eines externen elektromagnetischen Feldes an die Schlitzantenne erfolgen. Auch die Ankopplung an die Antenne des NFC-Transponders, welche wenigstens teilweise den Schlitz überlappt, kann durch diese Demetallisierung der Beschichtung, insbesondere der Reflexfolie, verbessert werden.

Insbesondere kann es die Erfindung vorsehen, dass der Datenträger in einer Aufnahmemulde im Kennzeichenkörper angeordnet ist, wobei die Aufnahmemulde bevorzugt einem Ende des Schlitzes zugeordnet ist und vorzugsweise eine Bodenwandung aufweist, in der sich ein Ende des Schlitzes hineinerstreckt, oder die Bodenwandung eine Öffnung aufweist, die kleiner als der Datenträger ist. Durch das Positionieren des Datenträgers bzw. des RFID-Chips, in der offenen Mulde, kann der Datenträger auf eine besonders sichere Art und Weise in den Kennzeichenkörper integriert werden.

Weiter kann es erfindungsgemäß vorgesehen sein, dass der RFID-Chip und der NFC-Transponder eine bauliche Einheit mit zwei Antennen für den HF- und UHF-Frequenzbereich bilden, die unabhängig voneinander auslesbar sind. Durch eine gemeinsame Einhausung des RFID-Chips und des NFC-Transponders lässt sich das Kennzeichen auf eine besonders einfache, günstige und platzsparende Art und Weise mit den elektronischen Bauteilen ausstatten. Da sich die Frequenzbereiche des RFID-Chips und des NFC-Transponders nicht überlappen, kommt es auch zu keiner gegenseitigen Störung beim Senden oder Empfangen von Daten. Vielmehr ist es denkbar, dass der RFID-Chip und der NFC-Transponder sich Bauteile, wie beispielsweise einen Speicher oder sonstige Leitungen teilen. Schließlich kann es vorgesehen sein, dass die Schutzabdeckung als flexible, selbstklebende und retroreflektierende Folie ausgebildet ist, mit vorzugsweise eingebundenen oder eingekapselten Mikroglasperlen oder als prismatische Folie, wobei vorzugsweise in mindestens einer Schicht der Folie metallische Partikel enthalten sind, welche eine elektrische Leitfähigkeit besitzen, oder dass die Schutzabdeckung aus einem elektrisch leitenden, insbesondere aus Aluminium oder Blech, oder aus einem elektrisch nicht leitenden Material, insbesondere Kunststoff oder Acryl, aufgebaut ist.

Ein zusätzliches bevorzugtes Ausführungsbeispiel der vorliegenden Erfindung kann es vorsehen, dass der Kennzeichenkörper aus einem elektrisch leitenden Material, insbesondere aus Aluminium oder Blech, oder aus einem elektrisch nicht leitenden Material, einem Polymer, insbesondere aus einem Kunststoff wie Acryl, aufgebaut ist,, oder dass der Kennzeichenkörper als flexible, selbstklebende und/oder retroreflektierende Folie ausgebildet ist mit vorzugsweise eingebundenen oder eingekapselten Mikroglasperlen oder als prismatische Folie, wobei vorzugsweise in mindestens einer Schicht der Folie metallische Partikel enthalten sind, welche eine elektrische Leitfähigkeit besitzen.

Ein weiteres Fahrzeugidentifikationsmittel zur Lösung der genannten Aufgabe weist die Merkmale des Anspruchs 18 auf. Das Fahrzeugidentifikationsmittel, insbesondere Fahrzeugkennzeichen, weist einen Kennzeichenkörper auf, welcher mindestens ein Beschriftungsfeld aufweist mit mindestens einer Beschriftung. Dem Kennzeichenkörper ist mindestens ein berührungslos auslesbarer NFC-Transponder zur Nahfeld-Kommunikation zugeordnet. Dieser NFC-Transponder weist einen Datenträger und eine Antenne auf. Eine Schutzabdeckung deckt den Kennzeichenkörper mitsamt dem NFC-Transponder ab. Darüber hinaus weist der Kennzeichenkörper einen Durchbruch auf, dem wenigstens teilweise die Antenne des NFC-Transponders zugeordnet ist. Der hier beanspruchte Durchbruch in dem Kennzeichenkörper kann nahezu jede beliebige Form aufweisen. Eine bevorzugte Form des Durchbruchs stellt ein Rechteck, ein Oval bzw. ein Kreis oder eine beliebige Umrandung dar. Bei diesem Durchbruch handelt es sich um eine durchgehende Öffnung in dem Kennzeichenkörper, welche auch als Freiraum oder Aussparung bezeichnet werden kann. Durch die Zuordnung der Antenne zu dem Durchbruch koppelt ein externes elektromagnetisches Feld zur Datenübertragung und Energieversorgung besonders effektiv und zuverlässig an die Antenne des NFC-Transponders an. Durch diese Ankopplung lässt sich der Datenträger des Transponders sowohl auslesen als auch beschreiben sowie, sofern es sich um ein passives Bauelement handelt, mit elektrischer Energie versorgen. Erfindungsgemäß kann es vorgesehen sein, dass die Antenne vollständig, teilweise oder gar nicht mit dem Durchbruch überlappt. Sofern die Antenne des NFC-Transponders nicht mit der Umrandung des Durchbruchs überlappt, ist die Antenne in einem geringen, d. h. einige wenige Millimeter oder Zentimeter, Abstand zu der Umrandung auf dem Kennzeichenkörper zu platzieren, sodass trotz der Beabstandung noch eine ausreichende Kopplung zwischen der Antenne des NFC-Transponders und der Umrandung des Durchbruchs besteht.

Die Umrandung des Durchbruchs bildet eine Schlitzantenne bzw. durch den Kennzeichenkörper mit dem Durchbruch wird eine Schlitzantenne geschaffen. Die physikalischen Eigenschaften bzw. die Antenneneigenschaften der Schlitzantenne bzw. des Durchbruchs sind vergleichbar mit denen einer Dipolantenne.

Die Anordnung des Datenträgers in dem Durchbruch schafft eine besonders flache Kennzeichenstruktur. Durch diese Anordnung des Datenträgers in oder über bzw. auf dem Durchbruch ist der Datenträger bzw. der Transponder an sich durch die Schutzabdeckung von einem externen Betrachter so gut wie nicht mehr wahrnehmbar. Dieser optische Schutz des Datenträgers ist insbesondere für eventuelle Manipulationsversuche besonders vorteilhaft, da der Datenträger bzw. der NFC-Transponder nicht sofort sichtbar ist.

Bevorzugt kann es die vorliegende Erfindung außerdem vorsehen, dass der Datenträger und/oder wenigstens Abschnitte der Antenne des NFC-Transponders in dem Durchbruch in eine elektrische nichtleitende Vergussmasse, insbesondere ein Kunststoff oder ein Hartz, eingegossen sind, insbesondere, dass der Durchbruch mit der Vergussmasse aufgefüllt ist. Durch dieses Vergießen der wesentlichen Bestandteile des NFC-Transponders mit dem Kennzeichenkörper wird der Transponder integraler Bestandteil des Fahrzeugidentifikationsmittels. Ein Lösen des Transponders aus dem Durchbruch führt zwangsweise zu einer Zerstörung wenigstens der Antenne. Darüber hinaus bietet die Vergussmasse einen idealen Schutz der elektrischen Bauteile, insbesondere der Antenne und des Datenträgers, vor Umwelteinflüssen, wie beispielsweise Feuchtigkeit, Schmutz, aber auch Kälte sowie Hitze.

Ein weiteres vorteilhaftes Ausführungsbeispiel der vorliegenden Erfindung kann es vorsehen, dass die Antenne des NFC-Transponders, insbesondere Windungen der Antenne, eine Leiterschleife oder eine Spule, eine rechteckige oder eine runde bzw. kreisförmige Fläche einschließt und eine Seitenkante dieser Fläche in Ihrer Länge bzw. ein Umfang dieser Fläche in seinem Durchmesser höchstens einer Länge des Durchbruchs entspricht, vorzugsweise kleiner ist, und eine Höhe des Durchbruchs mindestens 10 %, insbesondere mindestens 25 %, vorzugsweise mindestens 50 % einer Breite der Fläche bzw. des Durchmessers der Fläche entspricht. Die relative Dimensionierung der Antenne und des Durchbruchs stellen für den hier beschriebenen Anwendungsfall eine wichtige Eigenschaft für die Kommunikation mit einem externen Lesegerät dar. Das externe Lesegerät erzeugt ein hochfrequentes elektromagnetisches Wechselfeld im Frequenzbereich von 13,56 MHz, um an die Antenne des NCF-Transponders zu koppeln. Dieses Wechselfeld durchdringt die Antennen- bzw. Spulenfläche sowie den Durchbruch. Hierdurch wird in der Antenne eine elektromagnetische Spannung induziert, welche den NFC-Transponder als passiven integrierten Schaltkreis mit der notwendigen elektrischen Energie versorgt. Durch das wenigstens teilweise Überlappen der Antenne mit dem Durchbruch, kann das externe elektromagnetische Feld besonders gut mit der Antenne koppeln. Dabei ist es wesentlich, dass die Antennenfläche bzw. die Fläche, welche durch die Leiterschleife oder die Spule eingeschlossen wird, wenigstens in einer Dimension, parallel zur Ebene des Kennzeichenkörpers, sprich x- oder y-Richtung, kleiner ist als der Durchbruch. Darüber hinaus ist es vorteilhaft, dass der Anteil der Antenne, welcher sich mit dem Kennzeichenkörper überdeckt, also nicht in den Durchbruch fällt, elektrisch bzw. galvanisch, von dem Kennzeichenkörper getrennt ist.

Weiter kann es erfindungsgemäß vorgesehen sein, dass der NFC-Transponder, insbesondere die Antenne, an einer beliebigen Position des Durchbruchs angeordnet ist, wobei mindestens zwei gegenüberliegende Teilbereiche der Antenne über dem Durchbruch angeordnet sind. An welcher Stelle der NFC-Transponder entlang des Schlitzes angeordnet ist, spielt für die Ankopplung des externen elektromagnetischen Felds und somit der Performance oder Leistung des Transponders keine Rolle. Das Gleiche gilt auch für die Emissionscharakteristik des Transponders. Auf diese Weise kann der NFC-Transponder auf eine besonders einfache und flexible Art dem Kennzeichenkörper bzw. dem Identifikationsmittel zugeordnet werden.

Darüber hinaus stellt es eine besonders vorteilhafte Weiterentwicklung der Erfindung dar, dass der NFC-Transponder mit der Antenne und dem Datenträger auf einem, vorzugsweise selbstklebenden, Trägermaterial direkt auf einer Vorderseite des Kennzeichenkörpers und wenigstens teilweise über dem Durchbruch angeordnet sind und über dem NFC-Transponder die Schutzabdeckung auf dem Kennzeichenkörper appliziert ist. Bedingt durch diese Schichtstruktur, bestehend aus dem Kennzeichenkörper, einem Trägermaterial, dem NFC-Transponder sowie der Schutzabdeckung, kann das Identifikationsmittel zum einen besonders störungsfrei ausgelesen werden bzw. Daten senden und zum anderen stellt es für die Herstellung ein besonders einfach zu realisierendes System dar. Außerdem wird durch diese Schichtstruktur der NFC-Transponder integraler Bestandteil des Kennzeichens. Der NFC-Transponder ist in das Kennzeichen *incorporated.*

Ein weiteres vorteilhaftes Ausführungsbeispiel der Erfindung kann es vorsehen, dass der NFC-Transponder mit der Antenne und dem Datenträger auf einem, vorzugsweise selbstklebenden, Trägermaterial direkt auf einer Rückseite des Kennzeichenkörpers und wenigstens teilweise über dem Durchbruch angeordnet sind. Durch die Anordnung auf der Rückseite ist der Transponder besonders effizient vor Manipulationsversuchen sowie Umwelteinflüssen geschützt.

Bevorzugte Ausführungsbeispiele der Erfindung werden im Folgenden anhand der Zeichnung näher erläutert. In dieser zeigen:
- Fig. 1: ein erfindungsgemäßes Fahrzeugidentifikationsmittel mit einem Durchbruch,
- Fig. 2: ein Schnitt durch ein erfindungsgemäßes Fahrzeugidentifikationsmittel im Bereich eines Durchbruches und eines Datenträgers gemäß der Fig. 1,
- Fig. 3: eine Darstellung eines Durchbruchs mit einem NFC-Transponder,
- Fig. 4: ein weiteres Ausführungsbeispiel eines Durchbruchs mit einem N FC-Transponder,
- Fig. 5: ein erfindungsgemäßes Fahrzeugidentifikationsmittel mit einem NFC-Transponder,
- Fig. 6: ein Schnitt durch den NFC-Transponder gemäß Fig. 5, und
- Fig. 7: ein erfindungsgemäßes Fahrzeugidentifikationsmittel mit einem RFID-Chip und einem NFC-Transponder.

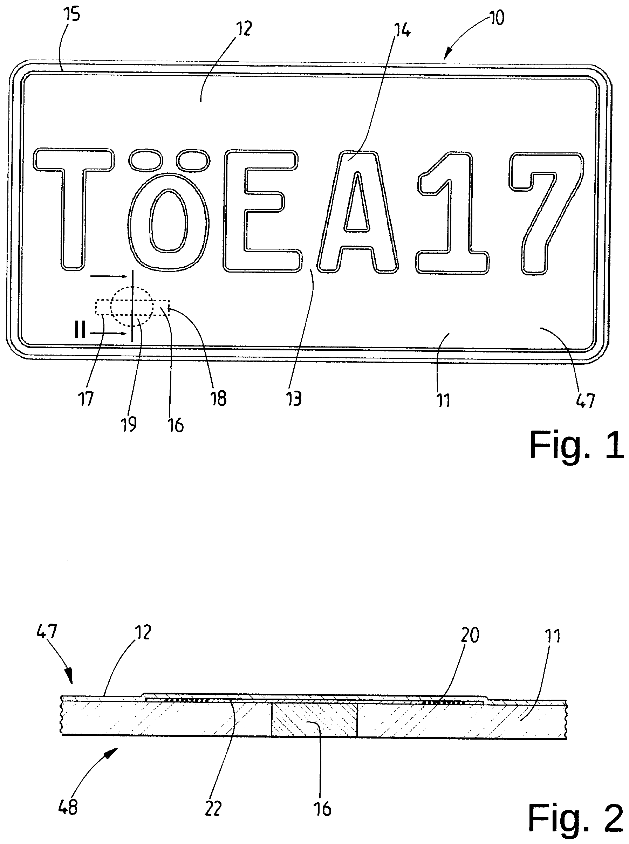

Ein erfindungsgemäßes Fahrzeugidentifikationsmittel 10 oder auch Fahrzeugkennzeichen besteht aus einem flächigen Kennzeichenkörper 11 mit einer Vorderseite 47 und einer Rückseite 48, wobei der Kennzeichenkörper 11 eine Schutzabdeckung 12 aufweist (Fig. 1). Im vorliegenden Fall handelt es sich um im Wesentlichen rechteckige Ausführungsbeispiele des Fahrzeugidentifikationsmittels 10. Es sind aber auch nahezu beliebige andere geometrische Formen des Kennzeichenkörpers 11 möglich. Dies hängt insbesondere von den lokalen, regionalen oder nationalen Bestimmungen wie entsprechende gesetzliche oder andere Regelungen ab.

Das in den Figuren dargestellte Fahrzeugidentifikationsmittel 10 verfügt über ein Beschriftungsfeld 13, das der Vorderseite 47 des Identifikationsmittels 10 zugeordnet ist. In diesem Beschriftungsfeld 13 ist eine Beschriftung 14 vorgesehen, die zur Identifizierung dient. Die Beschriftung 14 des Kennzeichens 10 kann beispielsweise durch Bedrucken, Bekleben, Ausstanzen oder Prägen angebracht werden. Es ist aber auch denkbar, dass die Beschriftung 14 des Kennzeichens 10 durch ein generatives Verfahren bzw. über eine 3D-Druckverfahren aufgetragen wird. Die Beschriftung 14 selber ist nicht auf die hier gezeigten Buchstaben und Zahlen beschränkt. Vielmehr kann sie jede Art von Beschriftung und Kombination von Zeichen oder ähnlichem, einschließlich bildlicher Darstellungen enthalten. Häufig wird jedoch an dieser Stelle insbesondere zumindest das amtliche Kennzeichen bzw. die Nummer auf einem Nummernschild zur Identifikation des Fahrzeugs angebracht.

Des Weiteren weist das hier dargestellte Fahrzeugidentifikationsmittel 10 eine umlaufende Umrandung 15 auf, welche durch eine Prägung hergestellt ist. Neben dem hier dargestellten Fahrzeugidentifikationsmittel 10 aus Aluminium oder Blech ist es ebenso denkbar, ein Identifikationsmittel bzw. den Kennzeichenkörper 11 aus Kunststoff oder Acryl herzustellen. Auch die Verwendung des Materials wird in der Regel durch nationale Bestimmungen vorgegeben.

Dem in der Fig. 1 dargestellten Fahrzeugidentifikationsmittel 10, bzw. dem Kennzeichenkörper 11, ist ein rechteckiger Durchbruch 16 zugeordnet. Dieser Durchbruch 16 ist als eine Ausnehmung oder als ein Freiraum in dem Kennzeichenkörper 11 vorgesehen und erstreckt sich von einer Oberfläche des Kennzeichenkörpers 11 zu einer Unterseite bzw. von der Vorderseite 47 zu einer Rückseite 48. Bei dem in der Fig. 1 dargestellten Ausführungsbeispiel des Durchbruchs 16 ist eine Länge 17 des rechteckigen Durchbruchs 16 größer als eine Höhe 18 des Durchbruchs 16. In dem hier dargestellten Ausführungsbeispiel des Durchbruchs 16 ist die Länge 17 parallel zu einer Seitenkante des Fahrzeugidentifikationsmittels 10 ausgerichtet. Die Länge 17 bzw. der Durchbruch 16 kann jedoch auch eine beliebige Ausrichtung zu der Seitenkante des Fahrzeugidentifikationsmittels 10 aufweisen.

Über dem Durchbruch 16 ist ein NFC-Transponder 19 angeordnet, der eine Antenne 20 sowie einen Datenträger 21 bzw. Chip aufweist. Erfindungsgemäß ist der NFC-Transponder 19 derart über dem Durchbruch 16 positioniert, dass die Antenne 20 sich wenigstens teilweise über den Durchbruch 16 erstreckt.

Bei dem hier dargestellten Ausführungsbeispiel ist der NFC-Transponder 19 mit der Antenne 20 und dem Datenträger 21 auf einem Trägermaterial 22 angeordnet. Dieses Trägermaterial 22 ist elektrisch isolierend und kann wenigstens teilweise sowie ein oder beidseitig selbstklebend ausgebildet sein. Dieses Trägermaterial 22 mitsamt des NFC-Transponders 19 ist gemäß der Fig. 2 auf den Kennzeichenkörper 10 appliziert und zwar derart, dass er wenigstens teilweise den Durchbruch 16 abdeckt. Das Trägermaterial 22 sowie die verbleibende freie Oberfläche des Kennzeichenkörpers 11 werden durch die Schutzabdeckung 12 abgedeckt. Bei dieser Schutzabdeckung 12 kann es sich um eine flexible, selbstklebende und/oder retroreflektierende Folie handeln, mit vorzugsweise eingebundenen oder eingekapselten Mikroglasperlen oder auch um eine prismatischer und PVC Folie, welche der Lichtreflektion dienen. Darüber hinaus können in mindestens einer Schicht dieser Schutzabdeckung 12 metallische Partikel enthalten sein, welche eine elektrische Leitfähigkeit aufweisen. Durch das flächige Auftragen des Trägermaterials 22 mitsamt des NFC-Transponders 19 und das Abdecken der Schutzabdeckung 12 des Kennzeichenkörpers 11 ist der NFC-Transponder 19 auf der Oberfläche des Fahrzeugidentifikationsmittels 10 nur zu erahnen. Außerdem kann es vorgesehen sein, dass der Durchbruch 16 immer mit einem Material aufgefüllt ist, wobei das Material zum Fixieren und zum Schutz der elektronischen Komponenten (Transponder, Antenne, Leiter, Speicher) dient.

Ein weiteres hier nicht dargestelltes Ausführungsbeispiel kann es vorsehen, dass der NFC-Transponder 19 der Rückseite 48 des Kennzeichenkörpers 11 zugeordnet ist. Dabei ist der NFC-Transponder 19 auf die gleiche Art und Weise an der Rückseite 48 zu befestigen, wie zuvor für die Vorderseite 47 beschrieben. Bei dieser Positionierung erfährt der NFC-Transponder 19 eine erhöhte Sicherheit, da der Kennzeichenkörper 11 als weiteres Schutzschild vor mechanischen Einflüssen dient.

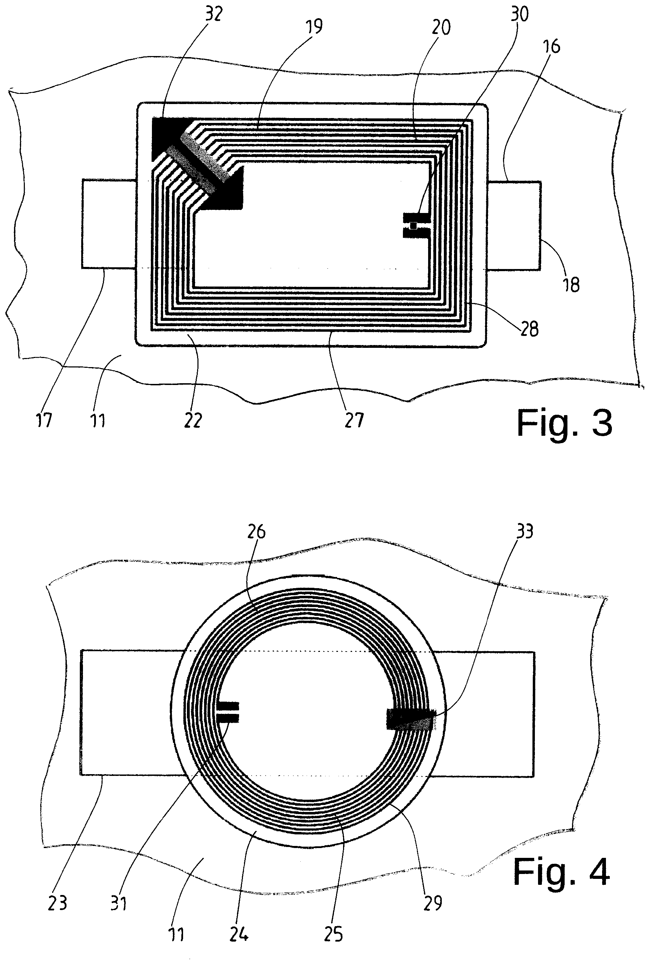

Die Fig. 3 und 4 zeigen zwei mögliche Ausführungsbeispiele eines Durchbruchs 16, 23 mit einem Trägermaterial 22 bzw. 24, wobei dem Trägermaterialien 22, 24 jeweils ein NFC-Transponder 19, 25 zugeordnet ist mit verschiedenen Antennenstrukturen 20, 26. Während die Antennenstruktur 20 des NFC-Transponders 19 rechteckig ausgebildet ist, beschreibt die Antennenstruktur 26 des NFC-Transponders 25 einen Ring.

Damit ein externes elektromagnetisches Feld auf eine zuverlässige und effiziente Art und Weise an den NFC-Transponder 19, 25 ankoppeln kann, ist es wesentlich, dass der Durchbruch 16, 23 wenigstens in einer Abmessung größer als die Antenne 20, 26 ist. So ist es beispielsweise für das Ausführungsbeispiel der Fig. 3 vorgesehen, dass eine Seitenkante 27 der Antenne 20 bzw. der Antennenstruktur 20 kleiner ist als die Höhe 18 des Durchbruchs 16. Sofern dies gegeben ist, kann eine Breite 28 der Antenne 20 bzw. der Antennenstruktur größer als die Höhe 18 des Durchbruchs 16 sein. Wesentlich ist, dass wenigstens eine Dimension der Antenne 20 kleiner ist als die Länge 17 oder die Höhe 18 des Durchbruchs 16, sodass ein elektromagnetisches Feld den Durchbruch 16 bzw. die Antenne 20 durchdringen kann. Die Antenne 20, 26 des NFC-Transponders 19, 25, 35, 42, insbesondere Windungen der Antenne 20, 26, eine Leiterschleife oder eine Spule, schließt eine rechteckige oder eine runde bzw. kreisförmige Fläche ein, wobei eine Seitenkante 27 dieser Fläche in Ihrer Länge bzw. ein Umfang dieser Fläche in seinem Durchmesser 29 höchstens einer Länge 17 des Durchbruchs 16, 23 entspricht, oder kleiner ist. Die Höhe 18 des Durchbruchs 16, 23 entspricht mindestens 10 %, insbesondere mindestens 25 %, vorzugsweise mindestens 50 % einer Breite 28 der Fläche bzw. des Durchmessers 29 der Fläche. Nur im Falle einer derartigen Durchdringung kann bei dem in den Fig. 1 und 2 dargestellten Ausführungsbeispiel des Fahrzeugidentifikationsmittels 10 eine effektive Ankopplung des elektromagnetischen Feldes an den NFC-Transponder 19 erfolgen.

Gleichermaßen muss ein äußerer Durchmesser 29 der Antenne 26 kleiner sein als wenigstens eine Dimension (Länge/Höhe) des Durchbruchs 23 (Fig. 4). Wie die Antenne letztendlich ausgebildet ist, ist zweitrangig. Die in den Fig. 3 und 4 dargestellten Antennen 20, 26 sind als spulenartige Leiterschleifen ausgebildet, die jeweils mit einem Datenträger 30, 31 sowie einem Verbindungsstück 32, 33 verbunden sind. Der Datenträger 30, 31 kann sich entweder ebenfalls in dem Durchbruch 16, 23 befinden oder auf dem Kennzeichenkörper 11. Erfindungsgemäß ist es außerdem denkbar, dass der NFC-Transponder 19, 25 vollständig in dem Durchbruch 16, 23 positioniert ist.

Insbesondere zum mechanischen Schutz, aber auch zur Fixierung ist der NFC-Transponder 19, 25 wenigstens teilweise in dem Durchbruch 16, 23 durch eine Vergussmasse eingegossen. Dadurch, dass der NFC-Transponder 19, 25 mit dem Trägermaterial 22, 24 sowohl zwischen dem Kennzeichenkörper 11 und der Schutzabdeckung 12 angeordnet ist als auch in dem Durchbruch 16, 23 vergossen ist, kann der NFC-Transponder 19, 25 nicht zerstörungsfrei von dem Fahrzeugidentifikationsmittel 10 entfernt werden. Somit kann durch eine einfache Schichtstruktur ein zuverlässig funktionierendes Identifikationsmittel mit einer erhöhten Manipulationssicherheit geschaffen werden.

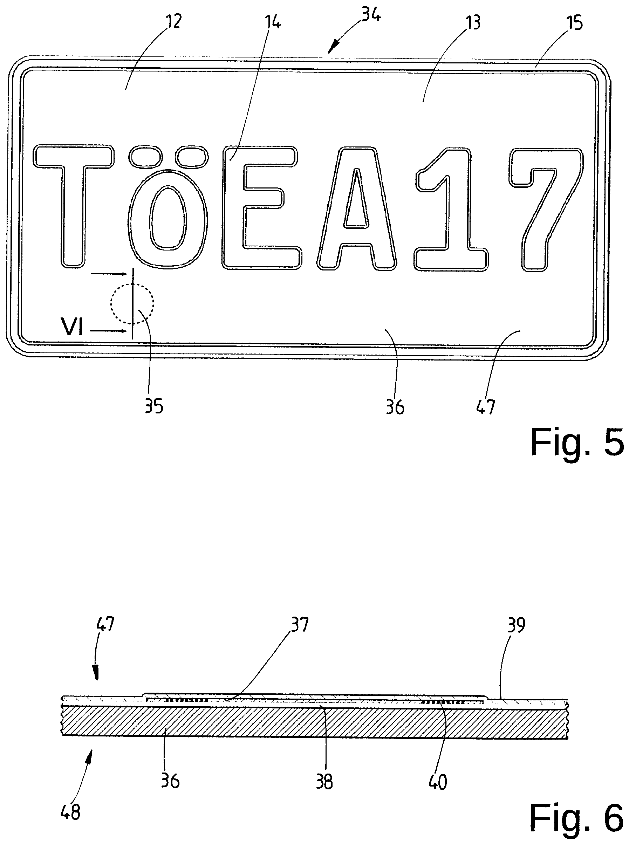

Das in der Fig. 5 dargestellte Ausführungsbeispiel eines Fahrzeugidentifikationsmittels 34 ist baugleich mit dem zuvor beschriebenen Fahrzeugidentifikationsmittel 10 mit der Ausnahme, dass das in der Fig. 5 dargestellte Fahrzeugidentifikationsmittel 34 keinen Durchbruch 16, 23 aufweist. Vielmehr ist bei dem dort dargestellten Ausführungsbeispiel ein NFC-Transponder 35 auf der Vorderseite 47 dem Kennzeichenkörper 36 positioniert, wobei zwischen einem Trägermaterial 37 des NFC-Transponders 35 und dem Kennzeichenkörper 36 eine elektrisch isolierende Schicht 38 angeordnet ist. Diese elektrisch isolierende Schicht 38 kann als eine doppelseitig klebende Kunststoffschicht oder als eine Lackschicht ausgebildet sein. Des Weiteren wird das Trägermaterial 37 des NFC-Transponders 35 auf der Schicht 38 durch eine Schutzabdeckung 37 abgedeckt. Diese Schutzabdeckung 39 ist gleichermaßen ausgebildet wie die zuvor anhand des Ausführungsbeispiels der Fig. 1 bis 4 beschrieben.

Bei dem in den Fig. 5 und 6 dargestellten Ausführungsbeispiel des Fahrzeugidentifikationsmittels 34 ist insbesondere eine Antenne 40 des NFC-Transponders 35 durch die Schicht 38 elektrisch isoliert von dem Kennzeichenkörper 36. Dies gestaltet sich insbesondere für den Fall als vorteilhaft, bei dem der Kennzeichenkörper 36 metallisch ausgebildet ist. Durch diese Schichtstruktur kann ein externes elektromagnetisches Feld ebenfalls auf eine sehr zuverlässige Art und Weise an die Antenne 40 des NFC-Transponders 35 koppeln, um sowohl auf einem Datenträger gespeicherte Daten auszutauschen und den als passives Bauelement ausgebildeten NFC-Transponder mit ausreichender elektrischer Energie zu versorgen. Bei diesem Ausführungsbeispiel lässt sich der NFC-Transponder 35 mit dem Trägermaterial 37 an nahezu jeder beliebige Position auf dem Kennzeichenkörper 36 anordnen. Darüber hinaus kann es vorgesehen sein, dass die elektrisch isolierende Schicht 38 nur zwischen dem Trägermaterial 37 und dem Kennzeichenkörper 36 angeordnet ist.

Ein weiteres hier nicht dargestelltes Ausführungsbeispiel kann es vorsehen, dass der NFC-Transponder 35 der Rückseite 48 des Kennzeichenkörpers 36 zugeordnet ist. Dabei ist der NFC-Transponder 35 auf die gleiche Art und Weise an der Rückseite 48 zu befestigen, wie zuvor für die Vorderseite 47 beschrieben. Außerdem ist dem auf der Rückseite 48 des Kennzeichenkörpers 36 angeordneten NFC-Transponder 35 ein Durchbruch im Kennzeichenkörpers 36 in der oben beschriebenen Art und Weise zugeordnet. Bei dieser Positionierung erfährt der NFC-Transponder 35 eine erhöhte Sicherheit, da der Kennzeichenkörper 36 als weiteres Schutzschild vor mechanischen Einflüssen dient.

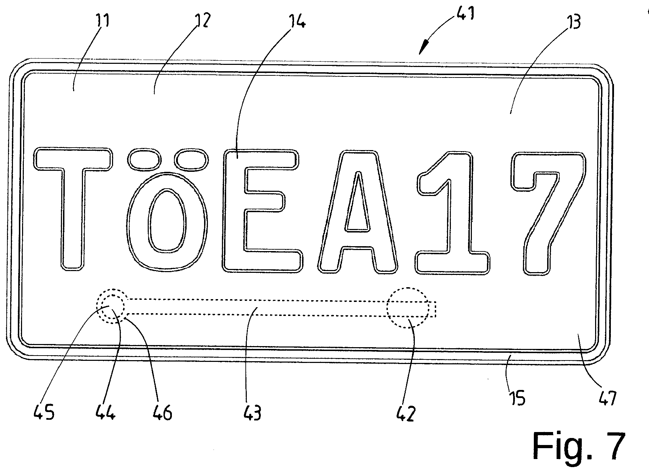

Bei dem in der Fig. 7 dargestellten Ausführungsbeispiel eines Fahrzeugidentifikationsmittels 41 ist ein Durchbruch für einen NFC-Transponder 42 als Schlitz 43 ausgebildet. Während für den NFC-Transponder 42 der Schlitz 43 die gleiche Funktion hat wie zuvor anhand der Fig. 1 bis 4 beschrieben, dient der Schlitz 43 gleichzeitig einem RFID-Chip 44 als Schlitzantenne. Der RFID-Chip 44 weist ebenfalls einen Datenträger 45 auf, der über eine weitere Leiterbahn bzw. Spule induktiv an die Schlitzantenne bzw. des Schlitzes 43 gekoppelt ist. Während der RFID-Chip 44 einem Ende des Schlitzes 43 zugeordnet ist, befindet sich in der Fig. 7 der NFC-Transponder 42 an einem anderen Ende des länglichen, vorzugsweise rechteckigen, Schlitzes 43 und zwar auf einer Vorderseite 47 des Kennzeichenkörpers 11. Der NFC-Transponder 42 ist derart auf dem Schlitz 43 platziert, dass sowohl ein entsprechendes externes elektromagnetisches Feld mit dem NFC-Transponder 42 koppeln kann als auch die Leistung der Schlitzantenne bzw. des Schlitzes 43 nicht durch den NFC-Transponder 42 beeinträchtigt wird.

Der RFID-Chip 44 kann dabei in einer Aufweitung 46 an einem Ende des Schlitzes 43 oder einer Mulde angeordnet sein und in diese Aufweitung 46 bzw. der Mulde durch eine Vergussmasse fixiert sein. Bei dieser Vergussmasse kann es sich um die gleiche Masse handeln, durch die auch der NFC-Transponder 42 in dem Schlitz eingebettet ist.

Ansonsten ist das Fahrzeugidentifikationsmittel 41 gleichermaßen ausgebildet wie das in den Fig. 1 und 2 dargestellte Fahrzeugidentifikationsmittel 10. Darüber hinaus sei vermerkt, dass sowohl die Form als auch die Dimension des Fahrzeugidentifikationsmittels 10, 34, 41, als auch des Durchbruchs 16, 23 bzw. des Schlitzes 43 von den hier dargestellten abweichen kann.

Ein weiteres hier nicht dargestelltes Ausführungsbeispiel kann es vorsehen, dass der NFC-Transponder 42 einer Rückseite 48 des Kennzeichenkörpers 11 zugeordnet sein kann. Dabei ist der NFC-Transponder 42 auf die gleiche Art und Weise an der Rückseite 48 zu befestigen, wie zuvor für die Vorderseite 47 beschrieben. Außerdem ist dem auf der Rückseite 48 des Kennzeichenkörpers 11 angeordneten NFC-Transponder 42 ein Durchbruch im Kennzeichenkörpers 11 in der oben beschriebenen Art und Weise zugeordnet. Bei dieser Positionierung erfährt der NFC-Transponder 42 eine erhöhte Sicherheit, da der Kennzeichenkörper 11 als weiteres Schutzschild vor mechanischen Einflüssen dient.

Ein weiteres nicht dargestelltes Ausführungsbeispiel des erfindungsgemäßen Fahrzeugidentifikationsmittel 10, 34, 41 kann es vorsehen, das der NFC-Transponder 19, 35, 42 in einer Mulde in dem Kennzeichenkörper 11, 36 angeordnet sein. Die Mulde kann dabei sowohl einer Vorderseite 47 als auch einer Rückseite 48 zugeordnet sein. Durch die Platzierung des NFC-Transponders 19, 35, 42 in der Mulde ist dieser zum einen geschützt vor Umwelteinflüssen und zum anderen unter einer Schutzabdeckung so gut wie nicht wahrnehmbar; und somit zusätzlich vor Manipulationsversuchen geschützt.

### Bezugszeichenliste:

| | | | |
|---|---|---|---|
| 10 | Fahrzeugidentifikationsmittel | 36 | Kennzeichenkörper |
| 11 | Kennzeichenkörper | 37 | Trägermaterial |
| 12 | Schutzabdeckung | 38 | Schicht |
| 13 | Beschriftungsfeld | 39 | Schutzabdeckung |
| 14 | Beschriftung | 40 | Antenne |
| 15 | Umrandung | 41 | Fahrzeugidentifikationsmittel |
| 16 | Durchbruch | 42 | NFC-Transponder |
| 17 | Länge | 43 | Schlitz |
| 18 | Höhe | 44 | RFID-Chip |
| 19 | NFC-Transponder | 45 | Datenträger |
| 20 | Antenne | 46 | Aufweitung |
| 21 | Datenträger | 47 | Vorderseite |
| 22 | Trägermaterial | 48 | Rückseite |
| 23 | Durchbruch | | |
| 24 | Trägermaterial | | |
| 25 | NFC-Transponder | | |
| 26 | Antenne | | |
| 27 | Seitenkante | | |
| 28 | Breite | | |
| 29 | Durchmesser | | |
| 30 | Datenträger | | |
| 31 | Datenträger | | |
| 32 | Verbindungsstück | | |
| 33 | Verbindungsstück | | |
| 34 | Fahrzeugidentifikationsmittel | | |
| 35 | NFC-Transponder | | |

## Patentansprüche

1. Fahrzeugidentifikationsmittel (10, 34, 41), insbesondere Fahrzeugkennzeichen, mit einem Kennzeichenkörper (11, 36), der wenigstens ein Beschriftungsfeld (13) aufweist, und mit mindestens einer Beschriftung (14), die dem Beschriftungsfeld (13) des Kennzeichenkörpers (11, 36) zugeordnet ist, wobei dem Kennzeichenkörper (11, 36) mindestens ein berührungslos auslesbarer NFC-Transponder (19, 25, 35, 42) zur Nahfeld-Kommunikation zugeordnet ist mit einem Datenträger (21, 30, 31) und einer Antenne (20, 26) und wobei der Kennzeichenkörper (11, 36) mit einer Schutzabdeckung (12, 39) abgedeckt ist, **dadurch gekennzeichnet, dass** der NFC-Transponder (19, 25, 35, 42) mit der Antenne (20, 26) und dem Datenträger (21, 30, 31) auf einem Trägermaterial (22, 24, 37) einem Kennzeichenkörper (11, 36) zugeordnet sind.

2. Fahrzeugidentifikationsmittel (10, 34, 41) nach Anspruch 1, **dadurch gekennzeichnet, dass** der NFC-Transponder (19, 25, 35, 42) direkt oder auf der Schutzabdeckung (12, 39) auf einer Vorderseite (47), vorzugsweise in einer Mulde, des Kennzeichenkörpers (11, 36) befestigt ist und über dem NFC-Transponder (19, 25, 35, 42) die Schutzabdeckung (12, 39) oder eine Schutzfolie auf den Kennzeichenkörper (11, 36) appliziert ist, wobei insbesondere der NFC-Transponder (19, 25, 35, 42) in der Mulde (Z) mit einer Vergussmasse eingegossen ist.

3. Fahrzeugidentifikationsmittel (10, 34, 41) nach Anspruch 1, **dadurch gekennzeichnet, dass** der NFC-Transponder (19, 25, 35, 42) direkt auf einer Rückseite (48), vorzugsweise in einer Mulde, des Kennzeichenkörpers (11, 36) befestigt ist, wobei insbesondere der NFC-Transponder (19, 25, 35, 42) in der Mulde mit einer Vergussmasse eingegossen ist.

4. Fahrzeugidentifikationsmittel (10, 34, 41) nach einem der Ansprüche 1 bis 3, **dadurch gekennzeichnet, dass** zwischen dem, vorzugsweise selbstklebenden, Trägermaterial (22, 24, 37) des NFC-Transponders (19, 25, 35, 42) und dem Kennzeichenkörper (11, 36) eine elektrisch isolierende Schicht (38), vorzugsweise ein Kunststoff oder eine Lackschicht, angeordnet ist.

5. Fahrzeugidentifikationsmittel (10, 34, 41) nach einem der Ansprüche 1 bis 4, **dadurch gekennzeichnet, dass** der NFC-Transponder (19, 25, 35, 42) in einem elektrisch nicht leitenden Gehäuse angeordnet ist und das Gehäuse direkt auf dem Kennzeichenkörper (11, 36) positioniert ist.

6. Fahrzeugidentifikationsmittel (10, 34, 41), insbesondere Fahrzeugkennzeichen, mit einem Kennzeichenkörper (11, 36), der wenigstens ein Beschriftungsfeld (13) aufweist, und mit mindestens einer Beschriftung (14), die dem Beschriftungsfeld (13) des Kennzeichenkörpers (11, 36) zugeordnet ist, wobei dem Kennzeichenkörper (11, 36) mindestens ein berührungslos auslesbarer NFC-Transponder (19, 25, 35, 42) zur Nahfeld-Kommunikation zugeordnet ist mit einem Datenträger (21, 30, 31) und einer Antenne (20, 26) und wobei der Kennzeichenkörper (11, 36) mit einer Schutzabdeckung (12, 39) abgedeckt ist, insbesondere nach einem der Ansprüche 1 bis 5 und/oder nach einem der Ansprüche 18 bis 23, **dadurch gekennzeichnet, dass** der Kennzeichenkörper (11, 36) eine durch einen Schlitz (43) gebildete UHF-Antenne aufweist und dieser UHF-Antenne ein ein magnetisches Feld erzeugender Datenträger (45) zugeordnet ist, wobei die Antenne (20, 26) des NFC-Transponders (19, 25, 35, 42) wenigstens teilweise dem Schlitz (43) zugeordnet ist oder der NFC-Transponder (19, 25, 35, 42) mit der Antenne (20, 26) und dem Datenträger (21, 30, 31) auf einem Trägermaterial (22, 24, 37) dem Kennzeichenkörper (11, 36) zugeordnet ist.

7. Fahrzeugidentifikationsmittel (10, 34, 41) nach Anspruch 6, **dadurch gekennzeichnet, dass** der NFC-Transponder (19, 25, 35, 42), insbesondere mit der Antenne (20, 26) und dem Datenträger (21, 30, 31), in einer Mulde in dem Kennzeichenkörper (11, 36) angeordnet ist.

8. Fahrzeugidentifikationsmittel (10, 34, 41) nach einem der vorherigen Ansprüche, **dadurch gekennzeichnet, dass** die Antenne (20, 26) des NFC-Transponders (19, 25, 35, 42) wenigstens teilweise, vorzugsweise vollständig, in oder über dem Schlitz (43) bzw. einem Durchbruch (16, 23), insbesondere auf einer Vorderseite (47) oder einer Rückseite (48) des Kennzeichenkörpers (11, 36), angeordnet ist.

9. Fahrzeugidentifikationsmittel (10, 34, 41) nach einem der Ansprüche 6 bis 8, **dadurch gekennzeichnet, dass** der Datenträger (45) induktiv an den Schlitz (43) angekoppelt ist, wobei der Datenträger (45) einen Chip, mindestens eine damit elektrisch leitend verbundene Spule und einen Träger aus einem isolierenden bzw. nichtleitenden Material aufweist und der Chip insbesondere als ein passiver Radio-Frequency-Identification-Chip (44) (RFID-Chip) ausgebildet ist.

10. Fahrzeugidentifikationsmittel (10, 34, 41) nach einem der Ansprüche 6 bis 9, **dadurch gekennzeichnet, dass** der Datenträger (45) elektrisch isoliert im Bereich eines Endes des Schlitzes (43) angeordnet ist und der NFC-Transponder (19, 25, 35, 42) einem gegenüberliegenden Endbereich des Schlitzes (43) zugeordnet ist, wobei der Schlitz (43) vorzugsweise um die Länge verlängert ist, die der NFC-Transponder (19, 25, 35, 42) den Schlitz (43) überdeckt.

11. Fahrzeugidentifikationsmittel (10, 34, 41) nach einem der Ansprüche 6 bis 10, **dadurch gekennzeichnet, dass** der Datenträger (45) isoliert innerhalb des Schlitzes (43) oder über dem Schlitz (43) angeordnet ist, vorzugsweise elektrisch leitende Bestandteile des Datenträgers (45) von Begrenzungsflächen des Schlitzes (43) beabstandet sind.

12. Fahrzeugidentifikationsmittel (10, 34, 41) nach einem der Ansprüche 6 bis 11, **dadurch gekennzeichnet, dass** der Datenträger (45) im Kennzeichenkörper (11, 36) eingebettet ist, insbesondere im Schlitz (43) fixiert ist, vorzugsweise von mindestens einer Beschichtung auf dem Kennzeichenkörper (11, 36).

13. Fahrzeugidentifikationsmittel (10, 34, 41) nach einem der vorhergehenden Ansprüche, **dadurch gekennzeichnet, dass** zumindest eine sichtbare Beschichtung als eine insbesondere selbstklebende Reflexfolie ausgebildet ist, die vorzugsweise im Bereich des Datenträgers (45) und /oder des Schlitzes (43) und/oder des NFC-Transponders (19, 25, 35, 42) so ausgebildet ist, dass sie keine elektrisch leitenden Bestandteile aufweist, insbesondere dass die Beschichtung einen sehr hohen ohmschen Widerstand aufweist.

14. Fahrzeugidentifikationsmittel (10, 34, 41) nach einem der Ansprüche 6 bis 13, **dadurch gekennzeichnet, dass** der Datenträger (45) in einer Aufnahmemulde im Kennzeichenkörper angeordnet ist, wobei die Aufnahmemulde bevorzugt einem Ende des Schlitzes zugeordnet ist und vorzugsweise eine Bodenwandung aufweist, in die sich ein Ende des Schlitzes (43) hinein erstreckt, oder die Bodenwandung eine Öffnung aufweist, die kleiner als der Datenträger (45) ist.

15. Fahrzeugidentifikationsmittel (10, 34, 41) nach Anspruch 9, **dadurch gekennzeichnet, dass** der RFID-Chip und der NFC-Transponder eine bauliche Einheit mit zwei Antennen für den HF- und UHF-Frequenzbereich bilden, die unabhängig voneinander auslesbar sind.

16. Fahrzeugidentifikationsmittel (10, 34, 41) nach einem der vorhergehenden Ansprüche, **dadurch gekennzeichnet, dass** die Schutzabdeckung (12, 39) als flexible, selbstklebende und retroreflektierende Folie ausgebildet ist mit vorzugsweise eingebundenen oder eingekapselten Mikroglasperlen oder als prismatische Folie, wobei vorzugsweise in mindestens einer Schicht der Folie metallische Partikel enthalten sind, welche eine elektrische Leitfähigkeit besitzen, oder dass die Schutzabdeckung aus einem elektrisch leitenden, insbesondere aus Aluminium oder Blech, oder aus einem elektrisch nicht leitenden Material, insbesondere Kunststoff oder Acryl, aufgebaut ist.

17. Fahrzeugidentifikationsmittel (10, 34, 41) nach einem der vorhergehenden Ansprüche, **dadurch gekennzeichnet, dass** der Kennzeichenkörper (11, 36) aus einem elektrisch leitenden, insbesondere aus Aluminium oder Blech, oder aus einem elektrisch nicht leitenden Material, insbesondere Kunststoff oder Acryl, aufgebaut ist, oder dass der Kennzeichenkörper als flexible, selbstklebende und retroreflektierende Folie ausgebildet ist mit vorzugsweise eingebundenen oder eingekapselten Mikroglasperlen oder als prismatische Folie, wobei vorzugsweise in mindestens einer Schicht der Folie metallische Partikel enthalten sind, welche eine elektrische Leitfähigkeit besitzen.

18. Fahrzeugidentifikationsmittel (10, 34, 41), insbesondere Fahrzeugkennzeichen, nach Anspruch 6 mit einem Kennzeichenkörper (11, 36), der wenigstens ein Beschriftungsfeld (13) aufweist, und mit mindestens einer Beschriftung (14), die dem Beschriftungsfeld (13) des Kennzeichenkörpers (11, 36) zugeordnet ist, wobei dem Kennzeichenkörper (11, 36) mindestens ein berührungslos auslesbarer NFC-Transponder (19, 25, 35, 42) zur Nahfeld-Kommunikation zugeordnet ist mit einem Datenträger (21, 30, 31) und einer Antenne (20, 26) und wobei der Kennzeichenkörper (11, 36) mit einer Schutzabdeckung (12, 39) abgedeckt ist, **dadurch gekennzeichnet, dass** der Kennzeichenkörper (11, 36) einen Durchbruch (16, 23) aufweist, dem wenigstens teilweise die Antenne (20, 26) des NFC-Transponders (19, 25, 35, 42) zugeordnet ist.

19. Fahrzeugidentifikationsmittel (10, 34, 41) nach Anspruch 18, **dadurch gekennzeichnet, dass** der Datenträger (21, 30, 31) und/oder wenigstens Abschnitte der Antenne (20, 26) des NFC-Transponders (19, 25, 35, 42) in dem Durchbruch (16, 23) in eine elektrisch nicht leitende Vergussmasse, insbesondere ein Kunststoff oder ein Harz, eingegossen sind, insbesondere dass der Durchbruch (16, 23) mit der Vergussmasse aufgefüllt ist.

20. Fahrzeugidentifikationsmittel (10, 34, 41) nach Anspruch 18 oder 19, **dadurch gekennzeichnet, dass** die Antenne (20, 26) des NFC- Transponders (19, 25, 35, 42), insbesondere Windungen der Antenne (20, 26), eine Leiterschleife oder eine Spule, eine rechteckige oder eine runde bzw. kreisförmige Fläche einschließt und eine Seitenkante (27) dieser Fläche in ihrer Länge bzw. ein Umfang dieser Fläche in seinem Durchmesser (29) höchstens einer Länge (17) des Durchbruchs (16, 23) entspricht, vorzugsweise kleiner ist, und eine Höhe (18) des Durchbruchs (16, 23) mindestens 10 %, insbesondere mindestens 25 %, vorzugsweise mindestens 50 % einer Breite (28) der Fläche bzw. des Durchmessers (29) der Fläche entspricht.

21. Fahrzeugidentifikationsmittel (10, 34, 41) nach einem der Ansprüche 18 bis 20, **dadurch gekennzeichnet, dass** der NFC- Transponder (19, 25, 35, 42), insbesondere die Antenne (20, 26) an einer beliebigen Position des Durchbruchs (16, 23) angeordnet ist, wobei mindestens zwei gegenüberliegende Teilbereiche der Antenne (20, 26) über dem Durchbruch (16, 23) angeordnet sind.

22. Fahrzeugidentifikationsmittel (10, 34, 41) nach einem der Ansprüche 18 bis 21, **dadurch gekennzeichnet, dass** der NFC-Transponder (19, 25, 35, 42) mit der Antenne (20, 26) und dem Datenträger (21, 30, 31) auf einem, vorzugsweise selbstklebenden, Trägermaterial (22, 24, 37) direkt auf einer Vorderseite (47) des Kennzeichenkörpers (11, 36) und wenigstens teilweise über dem Durchbruch (16, 23) angeordnet ist und über dem NFC-Transponder (19, 25, 35, 42) die Schutzabdeckung (12, 39) auf den Kennzeichenkörper (11, 36) appliziert ist.

23. Fahrzeugidentifikationsmittel (10, 34, 41) nach einem der Ansprüche 18 bis 22, **dadurch gekennzeichnet, dass** der NFC-Transponder (19, 25, 35, 42) mit der Antenne (20, 26) und dem Datenträger (21, 30, 31) auf einem, vorzugsweise selbstklebenden, Trägermaterial (22, 24, 37) direkt auf einer Rückseite (48) des Kennzeichenkörpers (11, 36) und wenigstens teilweise über dem Durchbruch (16, 23) angeordnet ist.
